# EUROPEAN PATENT APPLICATION

(11) **EP 1 959 679 A2**
(43) Date of publication of application: **20.08.2008**
(21) Application number: 07116333.1
(22) Date of filing: 13.09.2007
(51) Int. Cl.: H04N 5/445

(54) **Dynamic preferable program allocation**

(30) Priority: 16.02.2007 TR 200700934
(71) Applicant: Vestel Elektronik AS, 450030 Manisa (TR)
(72) Inventor: BORAN, Baris, c/o VESTEL ELEKTRONIK SANAYI VE TICARET A.S., 45030, MANISA (TR); SEVER, Enis, c/o VESTEL ELEKTRONIK SANAYI VE TICARET A.S., 45030, MANISA (TR)
(74) Representative: Cayli, Hülya

(57) **Abstract**

This invention relates to a dynamic preferable broadcast channels allocation method for television and radio receivers, for variable user preferences in different world regions. The goal is to establish a dynamic preferable program allocation list by giving the user region and/or language and content preference selection options and to make that particular list adjustable to channel content variations. After defining language and/or region and content preference priority selections; invention gives the user the optimum channel selection list depending on region and/or language and content preference selections and dynamically refreshes that created channel list in accordance to received channel content information and described priorities via a second tuner present in said invention.

## Description

### Technical Field

This invention relates to establishment of dynamic preferable broadcast channels allocation list for television and radio receivers, for variable user preferences in different world regions.

### Prior Art

Technically, broadcasting signals may include codes for identifying broadcast stations, channel contents, ratings etc., within their vertical blank interval (VBI, an informative extension stage attached to broadcast signal where teletext and other additional data are also carried). There are various applications in different countries. In England (UK), where channel contents are evaluated by means of codes present in broadcast channels and inappropriate channels, for example horror concepts for teenagers are blocked by receiver as the channel contents are evaluated and found unsuitable for initial users. Systems like parental control are also provided by those systems.

In the published patent application, EP01387583, a profile-recognition based personal television system is disclosed. In this system, profiles can be created, program descriptor information can be received, and personal channel schedules can be created due to scored broadcast channels. In those systems, personal channel schedules are created for a specific time, and in case of channel content changes, the system needs to be restarted in order to refresh personal channel lists.

Also, the patent EP0486988 may be regarded as another prior of art for channel auto-searching and listing system where it searches for broadcast signals, identifies the broadcast station on the basis of a code present in the channel signal, looking for the corresponding program number of the identified broadcast channel in pre-established table, memorizing the tuning information of the identified broadcast channel in the non-volatile memory under the corresponding number and performs a list via memorizing the broadcast channels in a the non-volatile memory under the corresponding channel number where corresponding channel numbers can be re-determined by user. The system in EP0486988B2 looks for corresponding program number in pre-established table and writes the tuning data and the identified broadcasting channel in the non-volatile memory only under the corresponding number. If one of the channels can not be found during search; the corresponding channel can not be assigned to a program number.

Also usage of multiple tuners provides extra features for TV receiver systems. Nowadays most of the television receiver systems include two tuners to perform extra features, such like picture in picture (PIP) applications. But in the prior art there is not any example for multiple tuner usage in order to refresh the channel priority list according to the channel content variations.

Accordingly, it is an object of the present invention to provide dynamic preferable program allocation by means of eliminating disadvantages of listed prior arts. The aim of the present invention is to establish a dynamic preferable program allocation list by giving the user region and/or language, and content preference selection options and to make that particular list dynamically adjusted according to channel content variations. To achieve this goal, the invention contains a region and/or language based priority list of broadcast channels in a pre-established order; whereby the priority order means the memorization order of the broadcast channels to program numbers and is determined in the site of manufacturer of the receiver. After making selections in region and/or language based priority lists, the user performs another choice by means of defining his/her content preferences. After language priority and content preference selections; system gives the user the optimum channel selection list depending on language, region and preference selections and this list is dynamically refreshed with the help of two tuners in the receiver. While a first tuner tunes to display selected channel located in priority and preference based channel list, another tuner dynamically searches for broadcast channels and describes their contents. According to those described contents; the invention dynamically refreshes user region and/or language priority and content preference based channel list.

### Object of the Invention

The aim of the present invention is to establish a dynamic preferable broadcast channel allocation list by giving the user region and/or language and content preference selection options and to make that particular list dynamically adjusted according to channel content variations.

### Description of Figures

Figure 1. An example for initial priority selection menu
Figure 2. An example for language priority selection menu
Figure 3. An example for content preference definition on TV screen
Figure 4. An example of a region and/or language based pre-established priority list

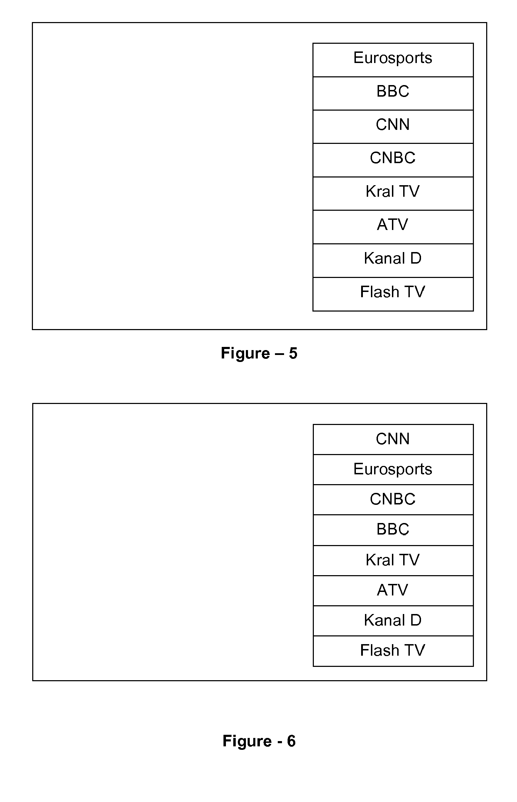

Figure 5. An example of an established channel list depending on user region and content priority selections
Figure 6. An example of a dynamically refreshed region and/or language and content priority based channel list

### Description of Invention

A method, of establishment of dynamic preferable broadcast channel allocation list in a television or radio receiver, comprises the following steps.

Step 1: User indicates his/her initial priority selection between region and/or language selection and content preference selection options.

Step 2: In order to indicate region and/or language priority selection, user selects the region and/or language based pre-established priority order list, in the receiver, from a plurality of region and/or language based pre-established orders for different countries or language selections where those priority order lists are created in the site of receiver manufacturer. In other words, region and/or language preference having a pre-established list for broadcast channels is selected.

Step 3: In order to indicate his/her content preference the user selects another priority based on content preference selections, for listing of broadcast channels depending on content preferences. (Users are capable of defining content preference such like news, music, film or football basketball etc.).More than one content preference selection can be done; the available content preference options are created in the site of manufacturer.

Step 4: After selection of the region and/or language, and content preference, channel searching begins. If no region language or content preference has been selected by the user, the default region and the default content preferences which is pre-selected by the manufacturer is selected. Also the user may reject to have automatic program search (APS) and the procedure can be interrupted in step 8 and jump to step 14; and the program numbers of the broadcasting channels in the established table will be in the order which has been found in the channel frequency search.

Step 5: All broadcasting channels search continues.

Step 6: When a channel has been found, the broadcast station, on the basis of a code present in the channel signal, is identified, if possible.

Step 7: The tuning information of the broadcasting channel is stored in the first memory of the receiver, in the order being found in the channel frequency search.

Step 8: After storing of a broadcasting station, it is jumped to step 5 and the searching and storing procedure continue until the frequency search is completed.

Step 9: When the channel frequency search is completed, sorting procedure begins.

Step 10: The broadcasting stations in the region and/or language based pre-established priority list (which have been pre-set by the manufacturer) are checked in the order, to determine whether they have been found in the frequency search, or not. (That pre-established priority list contains information about the language of channels, and that list is used in region and/or language selections).

Step 11: If the broadcasting station in the region and/or language based pre-established priority list is found in the list stored in the first memory, the tuning information of the identified broadcast channel is stored in the first memory to an established list under the next memory space corresponding to program number, in such a way that whenever a correspondence is detected the tuning information and the broadcasting station is stored.

Step 12: It is gone to step 11 until all of the available broadcasting stations are stored in the memory to the established list under the next memory space corresponding to program number. Consequently the channels will be listed in such a way that there will be no blank space in the list.

Step 13: It is checked whether there are broadcast signals that are not described in region and/or language based pre-established priority list or not; if there are, they are stored in the first memory to the established list under the next memory space corresponding to program number by using a second priority algorithm. The second priority algorithm means if the broadcast signal has an identification code it has a priority and if the broadcast signal is in "C" band it has another priority against a broadcast signal in "S" band.
Channels which do not contain an informative code within their channel signals (unidentified broadcast channels) and do not have initial priorities, are listed to said initial priority based list in accordance to an additional priority due to their frequency location where the first channel closest to beginning of frequency search spectrum gains an additional priority compared to other channels

Step 14: After the storing of all of the broadcasting signals which are found, the established table in the first memory is processed according to user-defined preferences.

Step 15: The channels in the established table in the first memory are finally stored to a second memory due to user-defined preferences, in such a way that, the preferred channels have higher priority compared to others.

Step 16: The first tuner of receiver is used to receive broadcast signal, to decode the signal and to output audio and/or video signals. Due to changes in channel contents in established list in the second memory; a second tuner is used to scan for broadcast channels to obtain program attribute data of received broadcast channels, and a processing circuitry is used for comparison of user priorities and channel contents in order to refresh priority and preference based channel list.

The second tuner dynamically searches for broadcast channels and obtains channel information. The processing circuitry refreshes established channel list, stored in the second memory, in accordance to comparison of selected priority and preferences with obtained channel information data. The channels are dynamically listed due to priority and preference selections. The user may re-determine and allocate channels on non-volatile memory, if necessary.

The present invention for constituting a dynamic preferable broadcast channel allocation is also explained by means of the following example.

Before performing an auto-search to list available broadcast channels in a receiver where that particular invention is used; the user is asked to select region, language and define his/her content preferences, where those region and/or language and content preference selection lists are created in the site of manufacturer.

As soon as user is encountered by region and language selections such like Turkey, England, Italy, and their languages etc., and asked to choose one of those region and language options whereas he/she is also asked to define preferences such like music, film, sports where user can detail the content preference selection from available preference lists.

By means of evaluating above listed operations; a dynamic preference and channel list selection is established.

For instance; a user in England who wishes to view English sport channels broadcasting football matches at top of broadcast channels list, enters the system "English" as language priority and choose "sports" as content preference; the content preference selection can be done in detailed manners; such like selecting "football games" under "sports" preference selections if possible; those preference selections are created in the site of manufacturer. The invention initially does an auto-search to list available broadcast channels in English and transforms all available channels to the first memory of the receiver to establish a table. In that particular established table in the first memory, English channels are listed above the others and have priority compared to other broadcast stations.

And then comes the preference based listing; the established table in the first memory is evaluated due to user preferences, stored to the second memory and the preference program allocation is completed. Within those processes, the codes present in channel signals are used to identify channel content, language, rating etc. During the preference based listing operation ,for stable contented channels such like news, sport; the invention uses pre-memorized channel content information for those channels which are also created in the site of manufacturer So whenever user makes a preference selection, on the course of establishing preference based channel list, besides evaluating channel contents from codes of signals, the pre-memorized channel content information stored in the second memory including channel content information for stable-contented channels is used. Those pre-memorized channel content information can be re-determined by user.

During and after the establishment of priority and preference based channel list; the second tuner present in the receiver, dynamically searches for broadcast channels, identifies found channels in accordance to codes present within broadcast channels, and refreshes priority and preference based channel list.

An example below is illustrated for selecting priorities and creating preferable program list.

As the user initially starts the invention included system, the user encounters a region and/or language, or preference selection menu out of listed selection options,

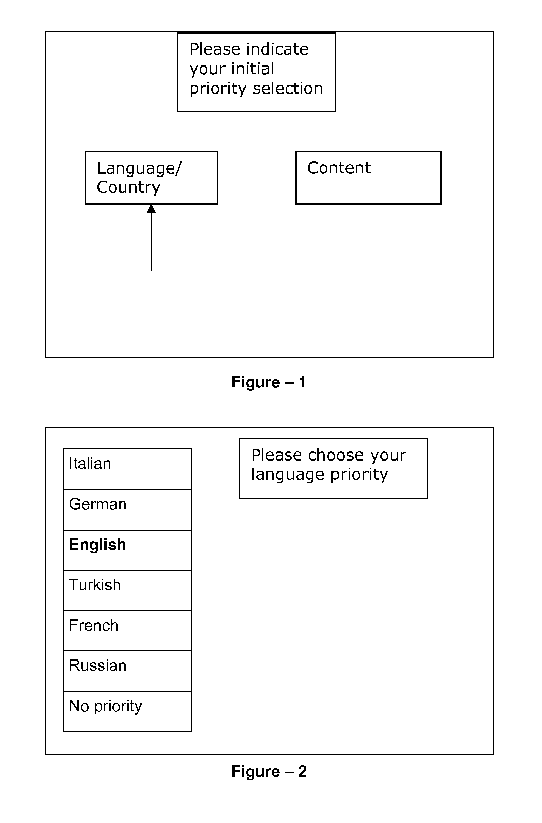

As it is seen in figure 1, user is given the opportunity to make language or content preference selections.

After making a language selection (initial priority is selected to be language for this case), a language preference option is provided to user, as seen in figure 2

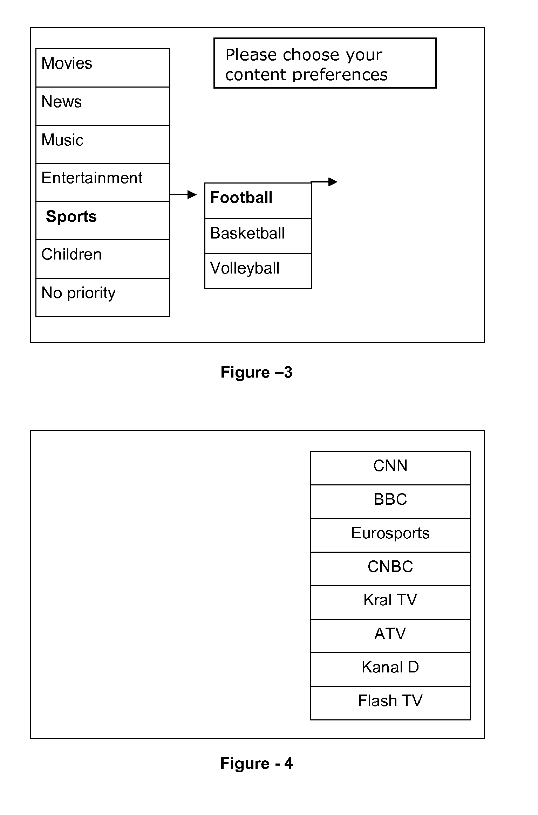

The next step will be defining content preferences out of listed preference selection options. The user defines content preferences by means of performing selections; or is capable of skipping the content preference selection. An example for content preference definition on TV screen is sketched in figure 3. As it is seen In figure 3,every selection contains sub-selections; for example the user can define his/her preferences in detailed manners by means of making detailed preference selections. In that introduced example, the "sports" preference selection contains "football", "basketball", "volleyball" sub-selections; those preference selection options are created in the site of manufacturer.

For that example, the user chose English as language priority, and defined content preference priority by means of making content preference selections out of available options.

After frequency search for broadcast signals, for instance eight channels are detected (normally thousands of channels will be detected).Those channels will be listed in the first memory with respect to a region and/or language based pre-established order, as it is seen in Figure-4. The pre-established list, used in region and/or language priority selections, is created in the site of manufacturer. And as soon as user makes a region and/or language selection, the found channels (stored in the first memory) are compared with that pre-established priority list and channels are listed in accordance to that pre-established priority list.

In the next step, those channels will be listed due to language and content preference priorities. As it is clear in Figure-5; the English sport channels will have higher priority compared to others.(The other channels are Turkish channels).CNN and CNBC broadcast in English language; but do not broadcast sports content at that instant ;Kral TV, ATV ,Kanal D and Flash TV are Turkish channels and none of them broadcast sports content at that instant. BBC and Eurosports which broadcast a football game at that instant will have priority compared to other channels(Eurosport is listed above BBC;as it is found before BBC in frequency spectrum), and CNN and CNBC will have priority compared to channels which do not broadcast in English. Kanal D and Flash TV are channels; whose signals do not contain an identification code, and does not appear to be in channel content list. (Channel content list is used for identification of channels and created in the site of manufacturer).As both Kanal D and Flash TV are not identified, they are listed according to their frequency location in frequency spectrum (Kanal D appears to be found before Flash TV)

By means of other features of the invention, the user is capable of choosing more than one preference options, the user may define second priority, based on preferences, by initially giving "sports" and "football" priority, and then making language selection, the channels which broadcast football games at that instant would have higher priority, compared to other channels, and English channels will have higher priority compared to other channels.

After establishing a region and content preference based channel listing, the content of the channels may change (for instance, while creating a list of channels in which English and sports channels are given priority, the channel contents are evaluated and processed instantly). For example; after a region selection for England and content preference selection for sports, BBC may be given priority to the top of channel list (at that time a football game was broadcasted), but after an hour, although the game finishes, BBC continues to exist at the top of preference based channel list.

In order to fix this situation, the invention contains a second tuner to scan for successive broadcast channels to establish a dynamic priority and preference based channel list, whereas the first tuner is used for decoding the signals and outputting audio and/or video signals.

Figure-6 shows the refreshment of the invention; where the content of BBC have changed; and the priority and preference based channel list is dynamically refreshed in accordance to selected priority and preference selections. The CNN started to broadcast a football match at that instant and the invention automatically gives CNN priority compared to other channels.

The present invention can be used in mass production for television or radio receivers, where the final user is given the chance to create a dynamic preferable program list depending on region, language and content preference selections in any region in the world; where broadcast signal can be received by the invention-included receiver.

## Claims

1. A method for establishment of a dynamic preferable broadcast channel allocation list in a television or radio signal receiver having a first and second tuner, comprising the following steps which have;
• defining a priority for making region and/or language selections,
• defining another priority by selecting content preferences,
• searching the frequency range for broadcast channels
• detecting broadcast signals during frequency search for broadcast channels
• storing the tuning information and/or the broadcasting station information of the found broadcast channel in a first memory
• classifying and/or listing the stored channels in said first memory due to priority selections in order to establish a priority and preference based channel/program list,
and said method is **characterized in that** it further comprises the following steps which have
• memorizing said priority based dynamic channel/program list in a second memory
• comparing the user defined priorities and channel contents by using a processing circuitry
• dynamically refreshing the priority based channel/program list by using a second tuner, in accordance to the comparison of obtained channel information data and defined priorities,

2. A method according to claim 1 wherein;
• said first tuner is used for receiving a broadcast signal, decoding the signal and outputting audio and/or video signals
• said second tuner is used for receiving broadcast signals and outputting real-time program attribute data

3. A method according to claim 1 wherein; said first memory is a volatile memory.

4. A method according to claim 1 wherein; said second memory is a non-volatile memory

5. A method according to claim 1 wherein; storing is storing the tuning information and/or the broadcasting station information of the found broadcast channel in a memory to a list under the next memory space.

6. A method according to claim 2 wherein; said second tuner tunes to broadcast channels in accordance to said tuning information and/or the broadcasting station information of the found broadcast channels stored in said first memory.

7. A method according to claim 1 wherein; the tuning information and/or the broadcasting station information of the found broadcast channel stored in a memory in a pre-established order.

8. A method according to claim 7 wherein; the said pre-established order is created in the site of manufacturer.

9. A method according to claim 1 wherein; the established list stored in said second memory can be re-determined by the user.

10. A method according to claim 1 wherein, said processing circuitry is used for comparison of user priorities and channel contents in order to refresh the priority and preference based channel list.
